# EUROPEAN PATENT SPECIFICATION

(11) **EP 3 576 014 B1**
(45) Date of publication and mention of the grant of the patent: **11.03.2026**
(21) Application number: 19176731.8
(22) Date of filing: 27.05.2019
(51) Int. Cl.: G06V 40/13, G06V 40/60

(54) **FINGERPRINT RECOGNITION METHOD, ELECTRONIC DEVICE, AND STORAGE MEDIUM**
FINGERABDRUCKERKENNUNGSVERFAHREN, ELEKTRONISCHE VORRICHTUNG UND SPEICHERMEDIUM
PROCÉDÉ DE RECONNAISSANCE D'EMPREINTES DIGITALES, DISPOSITIF ÉLECTRONIQUE ET SUPPORT D'ENREGISTREMENT

(30) Priority: 30.05.2018 CN 201810541833
(43) Date of publication of application: 04.12.2019
(73) Proprietor: Beijing Xiaomi Mobile Software Co., Ltd., Beijing 100085 (CN)
(72) Inventor: WANG, Gang, Beijing, Beijing 100085 (CN); WANG, Di, Beijing, Beijing (CN); TANG, Ju, Beijing, Beijing 100085 (CN)
(74) Representative: dompatent

(56) References cited:
- EP-A1- 3 211 514
- EP-A1- 3 239 879
- EP-A1- 3 285 205

## Description

### CROSS-REFERENCE TO RELATED APPLICATIONS

This application claims priority to Chinese patent application No. 201810541833.7, filed on May 30, 2018.

### BACKGROUND

With the continuous development of fingerprint recognition technology, the fingerprint recognition method of electronic products has also been developed continuously. For example, the technologies have gradually developed from the previous scratch-type fingerprint recognition and push-type fingerprint recognition (capacitive fingerprint recognition), to the under-screen fingerprint recognition methods, to further enhance the appearance of electronic devices and reduce external parts of electronic devices. Document EP 3 211 514 A1 (SHENZHEN GOODIX TECH CO LTD [CN]) 30 August 2017, discloses a fingerprint system with a wake-up operation to trigger the fingerprint and launch applications. Document EP 3 285 205 A1 (BEIJING XIAOMI MOBILE SOFTWARE CO LTD [CN]) 21 February 2018, discloses a fingerprint system with a wake-up operation based on touch. Document EP 3 239 879 A1 (SAMSUNG ELECTRONICS CO LTD [KR]) 1 November 2017 discloses a fingerprint system with a wake-up operation.

### SUMMARY

The present disclosure relates to the field of fingerprint recognition technology, and more particularly to a fingerprint recognition method and electronic device according to the appended claims.

In some embodiments, the method in the present disclosure also includes: when the fingerprint is successfully recognized, the display screen will be unlocked and the High Brightness mode will be turned off.

In some embodiments, the steps of entering into High Brightness mode include:
Entering into High Brightness mode after screen spots are turned on.

In the invention, the steps of entering into High Brightness mode after screen spots are turned on include:
Entering High Brightness mode of the display screen with fingerprint recognition area;
Turning on screen spots at the fingerprint recognition area.

In some embodiments, the steps of collecting fingerprint information include:
When there is a touch operation at the fingerprint recognition area, compare the pressure value of the touch operation with the preset standard pressure value;
When the current pressure value is greater than or equal to the preset standard pressure value, the fingerprint information at the fingerprint identification area will be collected.

In some embodiments, the method in the present disclosure also includes: when the current pressure value is less than the preset standard pressure value, the pressure prompt information will be output.

In some embodiments, when there is a touch operation at the fingerprint recognition area, the steps of comparing the pressure value of the touch operation with the preset standard pressure value include:
When there is a touch operation at the fingerprint recognition area, compare the duration of the touch operation with the preset standard pressure duration;
When the duration detected is up to the preset standard pressure duration, compare the pressure value of the touch operation with the preset standard pressure value;
In some embodiments, when there is a touch operation at the fingerprint recognition area, the steps of comparing the pressure value of the touch operation with the preset standard pressure value include:
   When there is a touch operation at the fingerprint recognition area, compare the area of the touch operation with the preset standard pressure area;
   When the detected touch area is greater than or equal to the preset standard pressure area, compare the pressure value of the touch operation with the preset standard pressure value;

In some embodiments, when the current pressure value is less than the preset standard pressure value, in the step of outputting the pressure prompt information, the pressure prompt information output corresponds to the current pressure value; wherein different pressure values correspond to different pressure prompt information.

In some embodiments, the steps of outputting pressure prompt information include:
Playing prompt animation; and/or,
Displaying text prompt message; and/or,
Displaying current pressure value; and/or,
Playing voice prompt message; and/or,
Outputting vibration prompt.

In some embodiments, the steps of playing prompt animation include:
Displaying the pressure display area corresponding to the current pressure value;
Zooming the display range of the pressure display area, and/or, change the color of the pressure display area, according to the changes of current pressure values.

In some embodiments, the steps of outputting pressure prompt information further include: prompting the preset standard pressure value.

In some embodiments, the steps of playing prompt animation further include: displaying the preset standard pressure area corresponding to the preset standard pressure value.

In some embodiments, the steps of outputting pressure prompt information include:
Playing prompt animation; and/or,
Displaying text prompt message; and/or,
Displaying current pressure value; and/or,
Playing voice prompt message; and/or,
Outputting vibration prompt.

In some embodiments, the steps of playing prompt animation include:
Displaying the pressure display area corresponding to the current pressure value;
Zooming the display range of the pressure display area, and/or, change the color of the pressure display area, according to the changes of current pressure values.

In some embodiments, the steps of outputting pressure prompt information further include: prompting the preset standard pressure value.

In some embodiments, the steps of playing prompt animation further include: displaying the preset standard pressure area corresponding to the preset standard pressure value.

In some embodiments, the method in the present disclosure also includes: an operation of unlocking and/or paying is performed in accordance with the recognition result.

In another aspect, an electronic device is provided, which comprises:
a processor;
a storage which is designed to store the executable instruction for the processor;
a display screen, the fingerprint recognition area of the display screen is equipped with an under-screen fingerprint recognition module;

Wherein the processor is configured to:
When the display screen is in Always on Display mode or in Off-Screen mode, if a wake event is detected, the system of the electronic device will be woken up, and the display screen will enter into High Brightness mode;
Collect fingerprint information;
The fingerprint information is identified according to a pre-stored fingerprint database to obtain a recognition result;
The under-screen fingerprint recognition module is configured to:
   Perform fingerprint recognition in the High Brightness mode.

In another aspect, a computer-readable storage medium is provided, which stores computer programs, following the steps below when executed by a processor:
When the display screen is in Always on Display mode or in Off-Screen mode, if a wake event is detected, the system of the electronic device will be woken up, and the display screen will enter into High Brightness mode;
Collect fingerprint information;
The fingerprint information is identified according to a pre-stored fingerprint database to obtain a recognition result.

In another aspect, a mobile terminal is provided including the device described above, and further including a microphone and a speaker.

In some embodiments, the mobile terminal is a mobile phone.

In some embodiments, the processor is a general-purpose processor, such as central processing unit (CPU) of the mobile phone, which is configured to not only realize the methods described above but also run programs or applications (Apps) on the mobile phone, such as browsing, gaming, video/textual/voice communications, etc.

In some other embodiments, the processor is an ASIC described above.

In some embodiments, the electronic device is integrated with the mobile phone; in some other embodiments, the electronic device can be a plug-and-play device for the mobile phone, and can access and be controlled by the programs/apps/instructions stored on the phone. In some implementations, the electronic device can draw power from the phone. In some other implementations, the electronic device can have its own battery.

In some embodiments, the mobile phone further includes a micro-electro-mechanical systems (MEMS) motion sensor configured to sense a fingerprinting recognition method.

Since both the electronic device and the computer readable storage medium of the present disclosure cover the fingerprint recognition method in the present disclosure, both the electronic device and the computer readable storage medium of the present disclosure provide the beneficial technical effects produced by the aforementioned fingerprint recognition method, so it will not be repeated here again.

It should be understood that both the foregoing general description and the following detailed description are exemplary and explanatory only and are not restrictive of the disclosure.

### BRIEF DESCRIPTION OF THE DRAWINGS

FIG. 1 provides a flowchart of a fingerprint recognition method according to some embodiments;
FIG. 2 provides a flowchart of a fingerprint recognition method according to some embodiments;
FIG. 3 provides a flowchart of the steps of acquiring fingerprint information according to some embodiments;
FIG. 4 provides a flowchart of a fingerprint recognition method according to some embodiments;
FIG. 5 provides a flowchart of the steps of playing prompt animation according to some embodiments;
FIG. 6 provides a schematic diagram of a lock screen interface when a terminal device in a lock screen state is to be waken up (when it needs to be waken up to unlock) in an application scenario of the fingerprint collection method according to some embodiments;
FIG. 7 provides a schematic diagram of an operation when a user performs an unlocking operation on a terminal device in a lock screen state in FIG. 6;
FIG. 8 provides a schematic diagram of an interface when a display screen of a terminal device outputs pressure prompt information when a pressure value of a user pressing force is less than the standard pressure value according to some embodiments;
FIG. 9 provides a schematic diagram showing the pressure display area being enlarged as the pressure value increases according to some embodiments;
FIG. 10 provides a diagram of a prompt interface diagram of pressure prompt information according to some embodiments;
FIG. 11 provides a diagram of a prompt interface diagram of pressure prompt information according to some embodiments;
FIG. 12 provides a diagram of a prompt interface diagram of pressure prompt information according to some embodiments;
FIG. 13 provides a flowchart of the steps of playing prompt animation according to some embodiments;
FIG. 14 provides a diagram of a prompt interface diagram of pressure prompt information according to some embodiments;
FIG. 15 provides a diagram of the scenario that generates a click event according to some embodiments;
FIG. 16 provides a diagram of the scenario that generates gesture event according to some embodiments;
FIG. 17 provides a diagram of a user application interface that is equipped with wake event mode controls according to some embodiments;
FIG. 18 provides a diagram of a user application interface that is equipped with wake event mode switch controls according to some embodiments;
FIG. 19 provides a diagram of a user application interface that is equipped with multiple optional wake methods under wake event mode controls according to some embodiments;
FIG. 20 provides a diagram of a user application interface that is equipped with click wake and gesture wake switch controls under the Touch Wake controls provided in FIG. 19 according to some embodiments;
FIG. 21 provides a diagram of a user application interface when click wake method is enabled by a user according to some embodiments;
FIG. 22 provides a diagram of a display interface of a screen in High Brightness mode according to some embodiments;
FIG. 23 provides a diagram of a display interface of a screen in High Brightness mode according to an exemplary embodiment of the present disclosure; and
FIG. 24 provides a structure diagram of an electronic device with a fingerprint recognition equipment according to some embodiments.

### DETAILED DESCRIPTION

Reference will now be made in detail to some embodiments, examples of which are illustrated in the accompanying drawings. The following description refers to the accompanying drawings in which the same numbers in different drawings represent the same or similar elements unless otherwise represented. The implementations set forth in the following description of some embodiments do not represent all implementations consistent with the disclosure. Instead, they are merely examples of apparatuses and methods consistent with aspects related to the disclosure as recited in the appended claims.

It is noted that the various device components, units, blocks, or portions may have modular configurations, or are composed of discrete components, but nonetheless may be referred to as "modules" in general. In other words, the "modules" or "units" referred to herein may or may not be in modular forms.

The under-screen fingerprint recognition method is a technology for acquiring a fingerprint image by using light or ultrasonic waves penetrating the display screen. It enables fingerprint recognition relying on the collected fingerprint image, and the collecting of the fingerprint image must rely on the light or the reflective capability of ultrasonic wave. In this way, the penetration ability of light or ultrasonic wave will be affected; during the reflection process, the collected signal will have a certain attenuation in the reflection path; all these will affect the quality of the fingerprint information collecting. Moreover, when the finger is dry or the temperature of the finger is too low or there is a space between the finger and the display screen due to poor fitting, the quality of the fingerprint image collected by the screen fingerprint recognition method will be worse. If the fingerprint information collecting cannot be triggered accurately, the above interference factors may cause the collected fingerprint information to be partially missing, which leads to a decrease in fingerprint recognition efficiency.

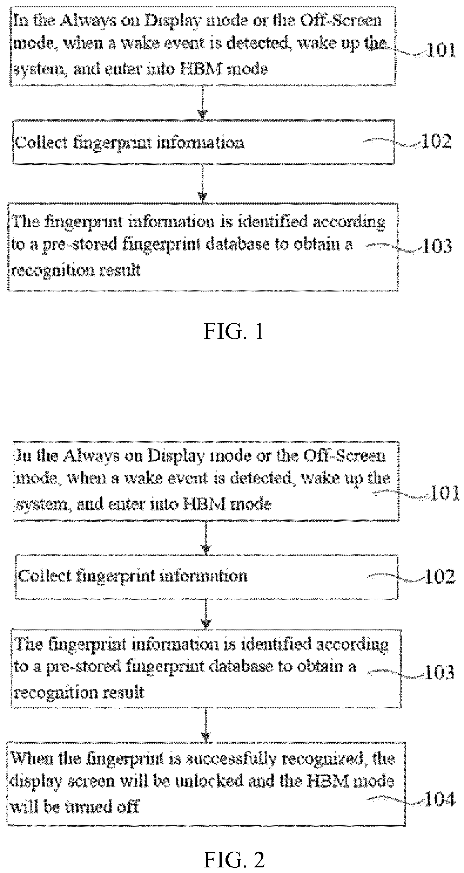

Keeping this in mind, the present disclosure provides a fingerprint recognition method. As shown in FIG. 1, the method can be used in a terminal device, including the following steps:

Step 101, when the display screen of a terminal device is in Always on Display (AOD) mode or the Off-Screen mode, if a wake event is detected, the system of the terminal device will be woken up, and the display screen will enter into High Brightness mode.

Step 102, collect fingerprint information.

Step 103, the fingerprint information is identified according to a pre-stored fingerprint database to obtain a recognition result.

In Step 101, under AOD mode, only some of the pixels in the display are illuminated. Off-Screen mode means that all pixels in the display are not illuminated. HBM mode refers to high brightness mode. The system that wakes up a terminal device refers to application processor (AP). According to the invention, in Step 101, a wake event can be detected by a sensing unit or detecting unit in a terminal device.

In Step 102, the fingerprint information is collected by a fingerprint identification module in a terminal device, which is an under-screen fingerprint recognition module.

In Step 103, the recognition results of the fingerprint information are collected by the recognition processing with the fingerprint information by a fingerprint identification module in a terminal device, which is an under-screen fingerprint recognition module.

In Step 103, the fingerprint database is obtained by a user entering the fingerprint information with a fingerprint identification module of a terminal device, before enabling a fingerprint unlocking or fingerprint payment function of a terminal device.

In the invention, the Step 103 includes the following steps:
Calling the pre-stored fingerprint database.

Determine whether the currently collected fingerprint information matches the pre-stored user fingerprint information according to the fingerprint database; if it matches, the recognition result representing the successful fingerprint recognition will be output; otherwise, the recognition result representing the fingerprint recognition failure will be output.

Therefore, it is ensured in the present disclosure that the system can maintain High Brightness mode and maintain the intensity of light during the fingerprint collection process by waking up the system of the equipment, first and controlling the display screen to enter High Brightness mode before a fingerprint is collected, so that the fingerprint information can be collected with the advantage of high intensity light, which is beneficial to avoid the problem of blurry fingerprint image caused by lack of light intensity, the space between fingers and display screen, dry fingers and low-temperature fingers, to ensure the amount of fingerprint information collected, improve the clarity of the collected fingerprint image and the efficiency of fingerprint recognition.

Referring to FIG. 2, based on the embodiment shown in FIG. 1, the present disclosure further includes the following steps:
Step 104: when the fingerprint is successfully recognized, the display screen will be unlocked and the High Brightness mode will be turned off.

In some embodiments, in Step 104, after the highlight mode is turned off, the screen will enter a normal display mode, for example, enter a user preset display mode preset by a user that is to be displayed in the required display brightness when in use.

In this way, the present disclosure can reduce power consumption by turning off HBM when the fingerprint is successfully recognized.

In Step 101, the step of entering the HBM mode includes: entering the HBM mode after turning on screen spots. Wherein, entering the HBM mode after turning on the screen spots refers to: the screen is displayed in HBM mode, and display light of the screen is white or cyan, and the white or cyan light can be regarded as a spot.

In this way, the present disclosure helps to further improve the clarity of collected fingerprint image, increase the amount of collected fingerprint information, and further improve the fingerprint recognition efficiency by turning on screen spots in the HBM mode, that is, displaying white light or cyan light in the display screen, and collecting the fingerprint image by using rays emitted by the white light or the cyan light.

In some embodiments, steps of entering into HBM mode after screen spots are turned on include the following:
Entering the HBM mode with fingerprint recognition area;
Turning on screen spots at the fingerprint recognition area.

In some embodiments, the fingerprint identification area refers to a display area corresponding to the fingerprint recognition module in the display screen.

In this way, the present disclosure facilitates the user to accurately and quickly know the location of the fingerprint identification area by displaying the fingerprint identification area in HBM mode, and avoids the impact on quality and efficiency of the fingerprint information collecting due to unable to correctly know the fingerprint identification area. And only turning on screen spots in the fingerprint recognition area, helps to reduce the control burden of the system and also reduces energy consumption.

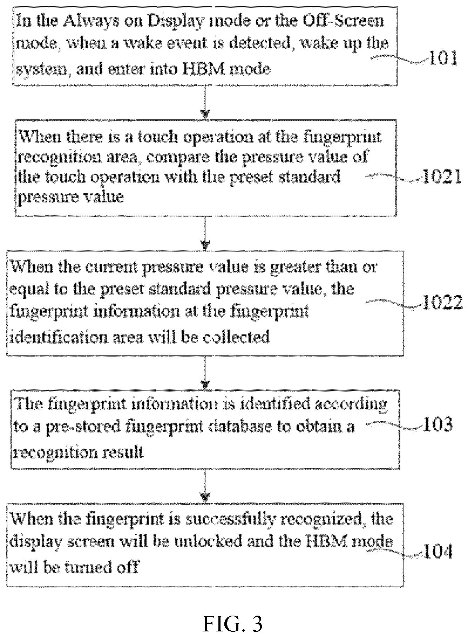

Referring to FIG. 3, based on any of the foregoing embodiments, Step 102, acquiring fingerprint information, may include the following steps:
Step 1021, when there is a touch operation at the fingerprint recognition area, compare the pressure value of the touch operation with the preset standard pressure value.

Step 1022, when the current pressure value is greater than or equal to the standard preset pressure value, the fingerprint information at the fingerprint identification area will be collected.

In some embodiments, in Step 1021, the touch operation may be detected by the touch detection module at the fingerprint recognition area of the display screen of a terminal device, for example, using a capacitive screen to detect the touch operation. The magnitude of the touch operation, that is, the pressure value, can be detected by the pressure detecting module at the fingerprint recognition area of the display screen of a terminal device, for example, using a pressure sensor to obtain a pressure value.

In some embodiments, in Step 1021, the touch operation may be generated by pressing a fingerprint identification area with a finger when the user needs to perform fingerprint input or fingerprint unlocking or fingerprint payment by a terminal device. The preset standard pressure value can be obtained according to the relationship between the pressing force and the quality of the fingerprint information collecting, and is stored in the terminal device.

In this way, the present disclosure compares the pressure value of the touch operation and the preset standard pressure value before the fingerprint is collected, and performs the fingerprint information collecting when the pressure value is greater than or equal to the standard pressure value. Therefore, it is ensured in the present disclosure that the system can maintain High Brightness mode and maintain the intensity of light during the fingerprint collection process by pressure pre-judgment to ensure the pressure of when performing unlocking or fingerprint payment, and further avoid the problem of blurry fingerprint image caused by lack of light intensity, the space between fingers and display screen due to insufficient compression, dry fingers and low-temperature fingers, to ensure the amount of fingerprint information collected, improve the clarity of the collected fingerprint image and the efficiency of fingerprint recognition.

In some embodiments, Step 1021 can include the following steps:
When there is a touch operation at the fingerprint recognition area, compare the duration of the touch operation with the preset pressure standard duration.

When the duration detected is up to the standard pressure duration, compare the pressure value of the touch operation with the standard pressure value;
In some embodiments, the duration of a touch operation can be calculated by the processor according to the detection information continuously input by a touch detection module. The preset standard touch duration can be a default value preset by the developer during the development phase, or can be preset by the user according to his own usage.

In some embodiments, the Step 1021 can include the following steps:
When there is a touch operation at the fingerprint recognition area, compare the area of the touch operation with the preset standard pressure area.

When the detected touch area is greater than or equal to the standard pressure area, compare the pressure value of the touch operation with the standard pressure value.

In some embodiments, the touch area of the touch operation can be detected by the touch detection module. The preset standard touch area can be preset by the developer during the development phase, or can be preset by the user according to his own usage.

In this way, the present disclosure determines the duration of the touch operation or the touch area before comparing the pressure value with the standard pressure value of the touch operation, and determines the pressure value after satisfying the condition, thereby avoiding a false touch operation responding to the user, reducing the energy consumption caused by the false touch to some extent.

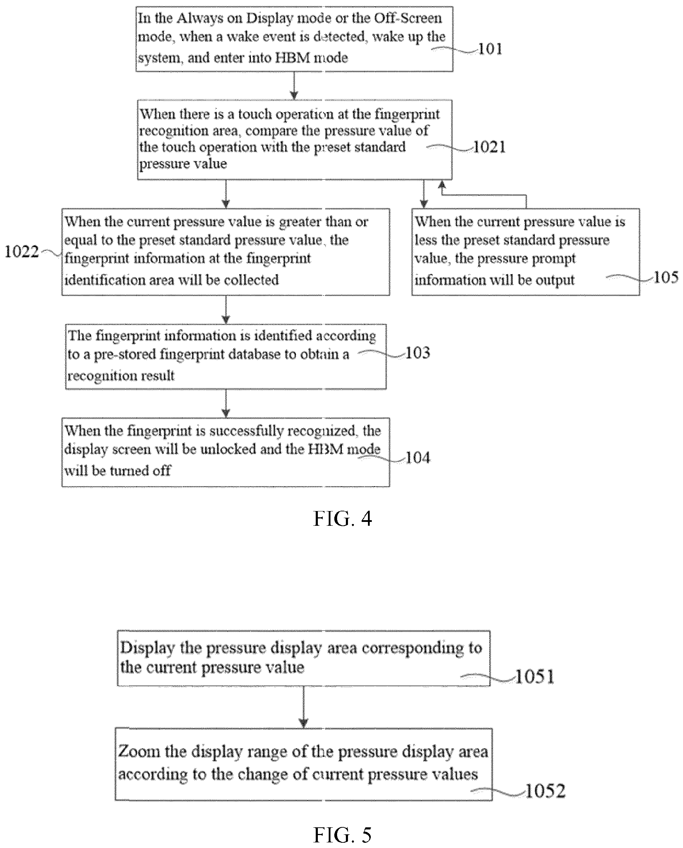

Referring to FIG. 4, based on the embodiment shown in FIG. 3, the fingerprint recognition method in the present disclosure further includes the following steps:
Step 105: when the current pressure value is less than the preset pressure standard value, the pressure prompt information will be output.

In some embodiments, in Step 105, after the pressure prompt information is output, the user adjusts the pressing force in the fingerprint recognition area according to the prompt information, so that the pressing force can be greater than or equal to the standard pressure value. At the same time, the pressure value of the user's adjusted pressing force is continuously obtained, and the continuously obtained pressure value will be compared with the standard preset pressure value until the obtained pressure value is greater than or equal to the standard pressure value.

Thus, the present disclosure outputs a pressure prompt message when the pressure value is less than the standard pressure value, that is, prompts the user to increase the pressing force at the fingerprint recognition area. Therefore, it is ensured in the present disclosure that the system can maintain High Brightness mode and maintain the intensity of light during the fingerprint collection process by combining the pressure pre-judgment and pressure prompt information to ensure the pressure of when performing unlocking or fingerprint payment, and better avoid the problem of blurry fingerprint image caused by the space between fingers and display screen due to insufficient compression, dry fingers and low-temperature fingers, to ensure the amount of fingerprint information collected, improve the clarity of the collected fingerprint image and the efficiency of fingerprint recognition.

In some embodiments, in Step 105, the pressure prompt information output corresponds to the current pressure value, wherein different pressure values correspond to different pressure prompt information. Wherein, in the process of changing the pressure value, the pressure prompt information is also continuously changed, so that the current output pressure prompt information corresponds to the current pressure value.

In some embodiments, in Step 105, the output pressure prompt information may include at least one of playing an animation prompt, displaying text prompt information, displaying a current pressure value, playing a voice prompt information, and outputting a vibration prompt.

Referring to FIG. 5, in some embodiments, the step of playing the prompt animation includes the following:
Step 1051, displaying the pressure display area corresponding to the current pressure value on the screen;
Step 1052, zooming/amplifying the display range of the pressure display area.

In some embodiments, in Step 1051, the form of the pressure display area displayed in the display screen of a terminal device may include: a pressure ring (circle shape or ring shape), lightning, foam, pressure circle (circular), cylinder, triangle, at least one of a regular shape or an irregular shape other than the foregoing shapes. Moreover, the size of the display area of these figures in the display screen is determined by the current pressure value.

In some embodiments, in Step 1052, a formula or a table that records a correspondence relationship between the pressure value and the pressure display area is stored in advance, so the pressure value change can be calculated or queried by a formula or a table during the pressure value change process. The size of the pressure display area corresponding to the process is continuously adjusted and displayed according to the change of the pressure value to the display range of the pressure display area (which can also be understood as the area size), for example, the bigger the pressure value, the larger the pressure display area, conversely, the smaller the pressure value, the smaller the display range of the pressure display area. This realizes playing the prompt animation.

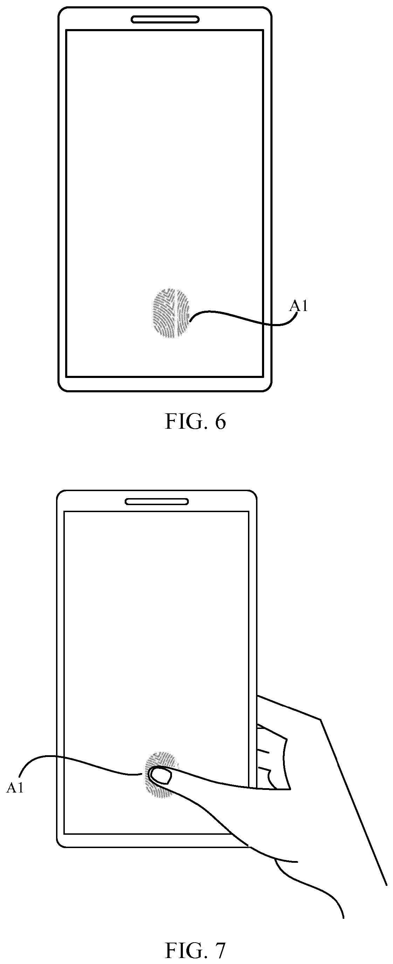

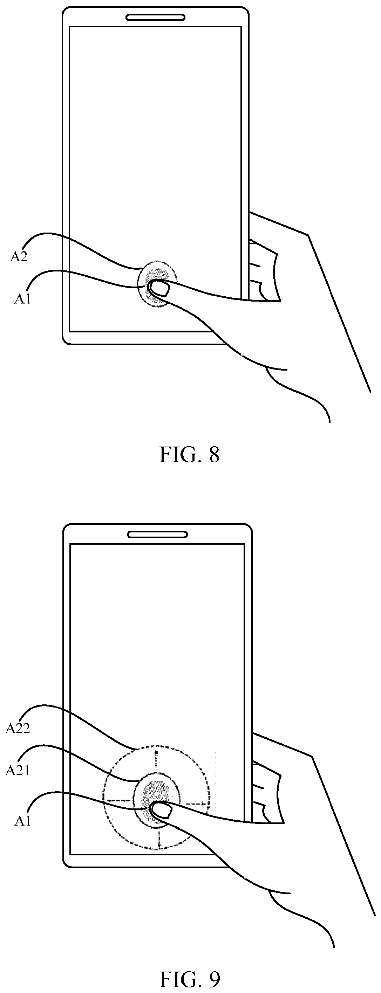

Hereinafter, applying the method in the present disclosure as the fingerprint unlocking when the screen is locked and playing prompt animation as output pressure prompt information as an example, the method of the present disclosure is described as below:
Referring to FIG. 6 , the schematic diagram of the lock screen interface when the terminal device in the lock screen state is in the awake state (such as when the device needs to be waken to unlock it); when the terminal device is awake and is in the lock screen state waiting to be unlocked, the fingerprint detection area of the screen is displayed with the fingerprint icon A1 to prompt the user to place the finger at the fingerprint icon A1. When the user needs to unlock, the corresponding finger is placed at the fingerprint icon A1, as shown in FIG. 7. When the pressure value of the user's pressing force is less than the standard pressure value, the display screen of the terminal device outputs pressure prompt information; when the obtained pressure value of the user's pressing force is less than the standard pressure value, the pressure display area A2 corresponding to the current pressure value is displayed, as shown in FIG. 8. Referring to FIG. 9, when the obtained pressure value is continuously increased, the pressure display area is gradually enlarged as the pressure value increases, and dynamically increases from the A21 state shown in FIG. 9 to the A22 state, showing the animated effects that the pressure display area is magnified. When the obtained pressure value is greater than or equal to the standard pressure value, the fingerprint information of the fingerprint detection area will be collected, realizing the collection of fingerprint information.

In some embodiments, based on Step 1052, the display color of the pressure display area may also be changed according to the change of the current pressure value. In other embodiments, Step 1052 is replaced by changing the display color of the pressure display area based on the change in the current pressure value. According to the change of the pressure value, the principle of changing the display color of the pressure display area is the same as the principle of the display range of the aforementioned zooming/amplifying pressure display area, and therefore will not be described again. However, the rendering of the display color change with the current pressure value may be: the larger the pressure value, the darker the display color of the pressure display area, and vice versa, the smaller the pressure value, the lighter the display color of the pressure display area; or change the color system of the pressure display area, for example, changes the display color from yellow to blue depending on the change in the pressure value.

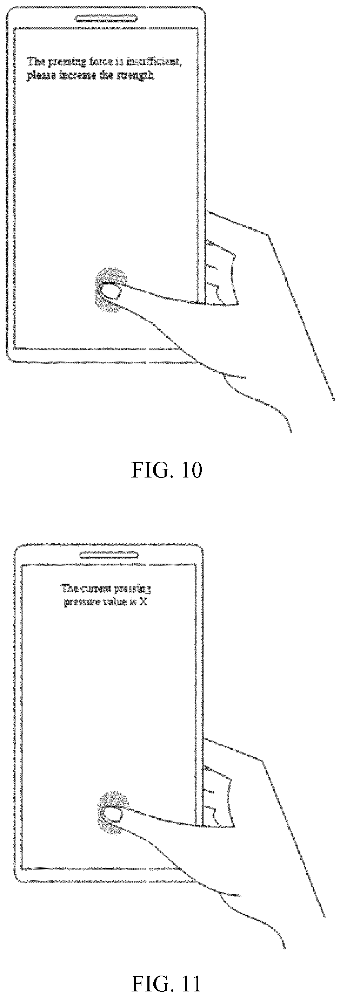

In some embodiments, as shown in FIG. 10, displaying text prompt information mentioned above may be configured by setting a text prompt display area in a display area of the display screen and displaying at least one of a text, a number, or a letter in the text prompt display area. For example, the text prompt information in the text prompt display area may be "the pressing force is insufficient, please increase the strength," wherein the content of the text prompt information may be changed according to the magnitude of the pressure value, for example, the greater the pressure value, the more the text prompt information is displayed, or the text reminder information may be "the current pressing pressure value is X, having not reached the standard pressure value, please increase the strength." Wherein X is the value of the currently obtained pressure value.

In some embodiments, as shown in FIG. 11, displaying current pressure value mentioned above may be performed by setting a pressure value display area in a display area of the screen and displaying the currently obtained pressure value in the pressure value display area. In other embodiments, in the embodiment in which the text prompt information is displayed, the current pressure value is directly displayed in the text prompt display area described above, and it is not necessary to additionally provide the pressure value display area.

In some embodiments, playing voice prompt information mentioned above may be played by using a voice module in the terminal device, and the content of the voice prompt information may include: "the pressing force is insufficient, and please increase the strength." The volume of the voice prompt may be changed according to the magnitude of the pressure value. For example, the greater the pressure value, the greater the volume of the voice prompt information.

In some embodiments, the output vibration prompt described above can be implemented by the vibration module in the terminal device, and the current pressure value can be represented by changing the vibration frequency and/or the magnitude of the vibration amplitude. The greater the pressure value obtained, the higher the vibration frequency of the output vibration prompt and/or the greater the vibration amplitude.

In some embodiments, in Step 105, the step of outputting the pressure prompt information may further include: the standard prompt pressure value.

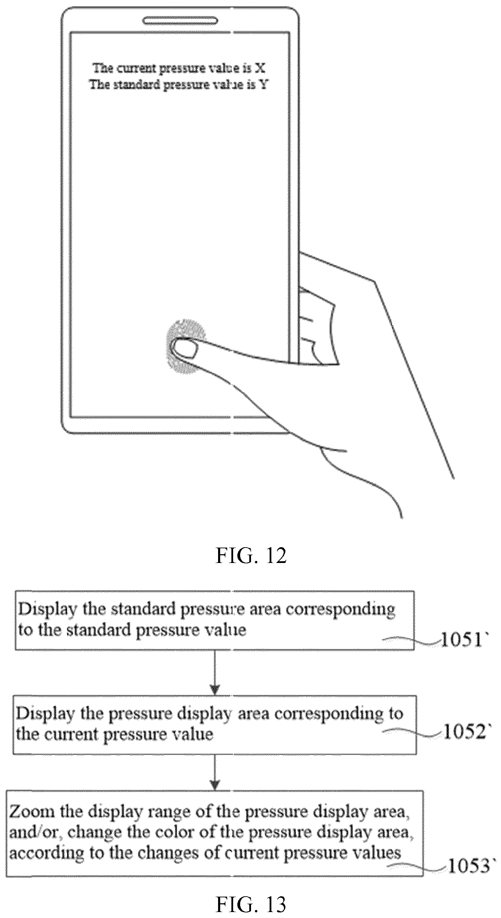

In some embodiments, the prompts for the standard pressure values can be implemented by text, voice, and animation. Referring to FIG. 12, the user can clearly know the pressure value and the standard pressure value of the current pressing force from the prompt interface, which is more convenient for the user to control the pressing force; and is beneficial to improving the user's regulation efficiency to pressure value and enhancement of the prompt effect.

Referring to FIG. 13, on the basis of the embodiments shown in FIG. 5, in some embodiments, the present disclosure adds a step of displaying a standard pressure area corresponding to a standard pressure value in the step of playing a prompt animation. that is, the step of playing the prompt animation includes the following steps:
Step 1051': displaying the standard pressure zone corresponding to the standard pressure value on the screen.
Step 1052': displaying the pressure display zone corresponding to the current pressure value on the screen;
Step 1053': zooming/amplifying the display range of the pressure display zone, and/or, change the color of the pressure display zone, according to the changes of current pressure values.

In some embodiments, in Step 1051', the standard pressure zone is fixed, the form of the pressure display area displayed in the screen of a terminal device may include: a standard ring (circle shape or ring shape), lightning, foam, standard circle (circular), cylinder, triangle, at least one of a regular shape or an irregular shape other than the foregoing shapes. Similarly, the size of the display area of these figures in the display screen is determined by the standard pressure value.

However, the order of steps 1051' and 1052' may not be limited. The understanding of step 1052' and step 1053' can refer to the previously mentioned description of step 1051 and step 1052, respectively.

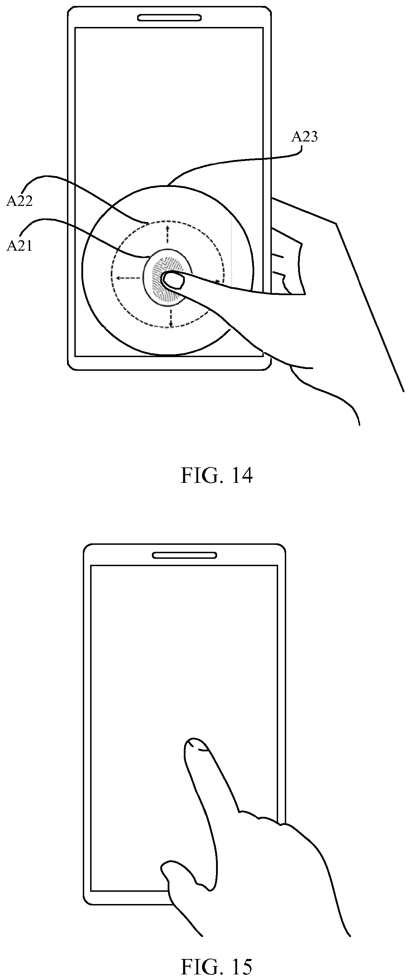

Referring to FIG. 14, wherein A21 and A22 respectively represent: when the obtained pressure value is continuously increased, the pressure display area is gradually enlarged as the pressure value increases, such as dynamically increasing from the A21 state shown in FIG. 14 to the A22 state, thereby rendering the animation effect that the pressure display zone being enlarged. In addition, A23 represents a standard pressure zone, and the standard pressure zone maintains a static display status during zooming/amplifying of the pressure display zone, that is, the standard pressure zone display range is fixed.

Therefore, the present disclosure combines the standard pressure zone corresponding to the standard pressure value in the prompt animation, so that the user can better control the pressing force according to the standard pressure zone, thereby better enhancing the prompting effect and improving the regulation efficiency to pressure value, which is beneficial to improve the efficiency of fingerprint collection and fingerprint recognition.

Based on any of the embodiments mentioned above, the disclosure further adds the steps of fingerprint unlocking or fingerprint payment, that is, the fingerprint identification method further includes the following steps:
Determine whether to perform the fingerprint unlocking and/or fingerprint payment operation according to the fingerprint recognition result.

Specifically, it may include the following steps:
When the fingerprint is successfully recognized and the pressure value at the time of fingerprint collection is less than the preset payment pressure threshold, perform the fingerprint unlocking operation.

When the fingerprint is successfully recognized and the pressure value at the time of fingerprint collection is greater than or equal to the preset payment pressure threshold, perform the fingerprint payment operation, or perform the fingerprint unlocking and fingerprint payment operation simultaneously.

In order to implement the above technical solution in fingerprint unlocking and/or fingerprint payment, correspondingly, in step 102, the standard pressure value includes an unlocking pressure threshold for triggering fingerprint information acquisition and executing an instruction of the fingerprint unlocking action, and a payment pressure threshold for triggering fingerprint information collection and execution of the fingerprint payment action. In this way, Step 1021 adaptively includes the following steps:
In Step 102a, when there is a touch operation at the fingerprint recognition area, display the first control for fingerprint unlocking and the second control for fingerprint payment, and receive a control instruction generated after the user clicks the control.

In Step 102b, when the control instruction is generated by the first control, compare the pressure value of the touch operation with the fingerprint payment pressure threshold; when the control instruction is generated by the second control, compare the pressure value of the touch operation with the fingerprint unlocking pressure threshold. Wherein the first control is bound to the fingerprint payment instruction, and the second control is bound to the fingerprint unlocking instruction.

In some embodiments, in step 102a, the display content of the first control in the display screen may be payment, and the display content of the second control in the display screen may be unlocked.

However, in other variant embodiments, the distinction between fingerprint unlocking and fingerprint payment operations may be implemented without a control, for example, by means of voice prompts and voice acquisition instructions, i.e. step 1021 adaptively includes the following steps:
When there is a touch operation at the fingerprint recognition area, a voice question will be sent. Wherein the content of the voice question can be "Do you need to perform fingerprint unlocking or fingerprint payment operation?"

Perform the fingerprint payment or fingerprint unlocking operation according to the received voice answer information. Wherein, after the user verbally answers "payment" or "unlock," the corresponding instruction will be generated according to the received voice answer information, that is, if the answer message is "payment," a fingerprint payment instruction shall be generated, the magnitude of the pressure value compared to the payment pressure threshold for the touch operation.

Therefore, it can be determined whether the fingerprint unlocking operation or the fingerprint payment operation should be performed according to the identification result and the magnitude of the pressure value at the time of fingerprint collection; and the efficiency of fingerprint unlocking and fingerprint payment can also be improved.

In some embodiments, Step 102b may include the following steps:
When the control instruction is generated by the first control, the duration of the touch operation compared to the preset standard touch duration; when the duration detected is up to the standard pressure duration, compare the pressure value of the touch operation with the payment pressure threshold.

When the control instruction is generated by the second control, compare the duration of the touch operation with the preset standard touch duration; when the duration detected is up to the standard pressure duration, compare the pressure value of the touch operation with the unlocking pressure threshold.

In some embodiments, Step 102b may include the following steps:
When the control instruction is generated by the first control, compare the touch area of the touch operation with the preset standard touch area; when the touch area detected is greater than or equal to the standard touch area, compare the pressure value of the touch operation with the payment pressure threshold.

When the control instruction is generated by the second control, compare the touch area of the touch operation with the preset standard touch area; when the touch area detected is greater than or equal to the standard touch area, compare the pressure value of the touch operation with the unlocking pressure threshold.

In some embodiments, in the step of 101, the wake event may include, but is not limited to, at least one of wake events among a touch wake event, a voice wake event, a location wake event, and a face wake event. Wherein the touch wake event can be detected by the touch detection module of the terminal device, for example, using a capacitive screen to detect a touch wake event. Wherein the voice wake event can be detected by the voice module in the terminal device. Wherein the location wake event can be detected by the GPS module or other positioning module in the terminal device. Wherein the face wake event can be detected by the face detection module in the terminal device.

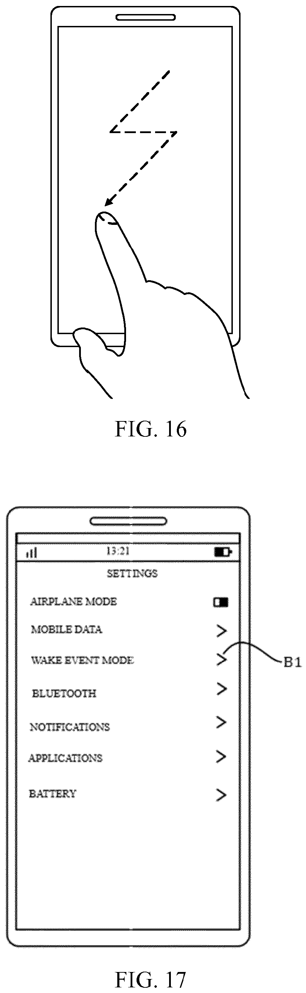

In some embodiments, a touch wake event includes: click event and gesture wake event. Wherein, as shown in FIG. 15, the click event may be generated by a user's finger performing a click operation on the screen. As shown in FIG. 16, the gesture wake event may be generated by the user's finger sliding on the display screen with a track that matches the preset sliding wake gesture; for example, if the preset sliding wake gesture is lightning, the user's finger sliding track on the screen needs to be a lightning-shaped trajectory to generate a gesture wake event.

In some embodiments, the voice wake event may be generated after the user issues a voice content that is the same with the preset voice wake content. Wherein the preset voice wake content may be: "wake up," or "stop hibernation," or user-defined content.

In the invention, the location wake event is generated by the user setting the location information when the wake operation needs to be performed in the terminal device, and then the location wake event is generated when the information the positioning module detects that the current location of the terminal device matches the preset location (for example, the current location of the terminal device is a location corresponding to the pre-set location information or a location range corresponding to the pre-set location information).

In some embodiments, the face wake event may be generated by the user entering a face image for triggering a face wake event in the terminal device in advance; when the user needs to wake up the system, he/she can aligns his/her face with the camera of the face detection module in the terminal device, after the face image ingested by the camera is identified and processed by the face detection module, a face wake event will be generated.

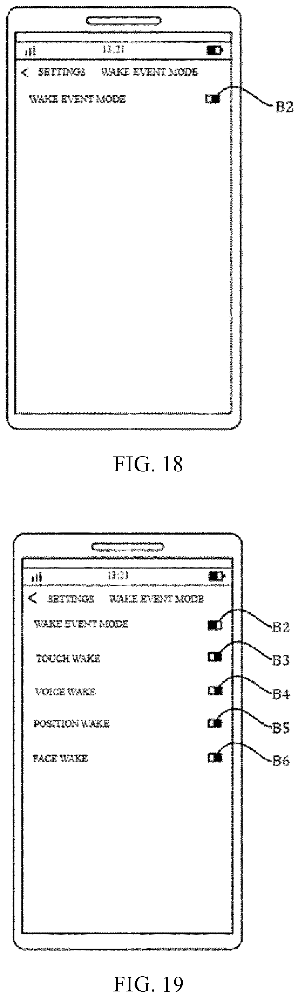

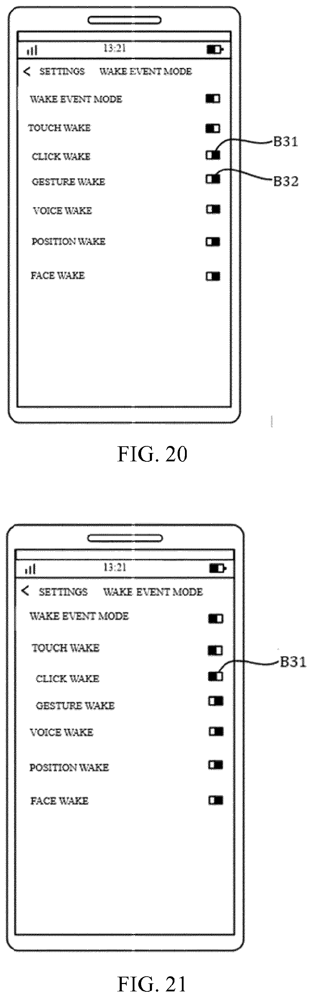

In some embodiments, the wake event mode control B1 can be configured in the "Settings" user application interface of the terminal device, as shown in FIG. 17. The switch control B2 for turning on or off the wake event mode can be configured under the wake event mode control B1, as shown in FIG. 18. The switch control B3, the voice wake switch control B4, the position wake switch control B5, and the face wake switch control B6 can be configured under the switch control B2, as shown in FIG. 19. The click wake switch control B31 and the gesture wake switch control B32 can be configured under the touch-wake switch control B3, as shown in FIG 20.

In the following, the user operation flow is briefly described by taking the user's need to enable the click wake method in the touch wake mode as an example:
When the user needs to enable the fingerprint recognition method of the present disclosure, first, open the "Settings" application of the terminal device, and enter the user interface as shown in FIG. 17; then, click the wake event mode control B1 to enter the user interface shown in FIG. 18; then, click the wake event mode switch control B2, making the switch control B2 move from the OFF state shown in FIG. 18 to the ON state shown in FIG. 19, and enter the interface as shown in FIG. 19, switch the switch control A2 from the OFF state shown in FIG. 19 to the ON state shown in FIG. 19; then, click the touch wake switch control B3 to switch the switch control A3 from the OFF state as shown in FIG. 19 to the ON state as shown in FIG. 20, and enter the user interface shown in FIG. 20; then, click "click wake" switch control B31, making the click wake switch control B31 to switch from the OFF state shown in FIG. 20 to the ON state shown in FIG. 21. This will enable the click wake mode.

In the invention, in HBM mode, in addition to displaying the fingerprint recognition area, an application display area may be displayed, that is, enter the HBM mode in which both the fingerprint recognition area and the application display area are simultaneously displayed.

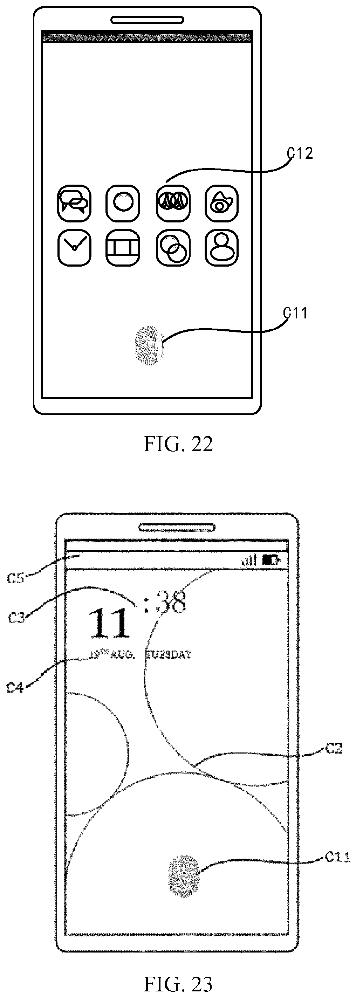

At this time, the display screen simultaneously displays the fingerprint identification area and the application display area, wherein the fingerprint recognition area can be represented by the fingerprint icon C11, and the application display area can directly display a plurality of application icons C12, as shown in FIG. 22.

In some embodiment, based on the embodiment shown in FIG. 22, the fingerprint unlocking step in the method of the present disclosure may further include the following steps:

When in the HBM mode, the application icon in the lock screen interface is selected, and the fingerprint is successfully recognized, the display screen will be unlocked, and enter the application interface corresponding to the selected application.

This allows the user to quickly enter the application interface of the desired application by first clicking the desired application icon and then performing the fingerprint unlocking operation at the fingerprint icon, which is more convenient for the user to use.

In some embodiments, in the HBM mode, also display at least one of the information of screen background, current time, current date, signal bar and information bar, as shown in FIG. 23. The display in the HBM mode can display the display background C2, the current time C3, the current date C4, and the signal field C5 in addition to the fingerprint recognition area C11.

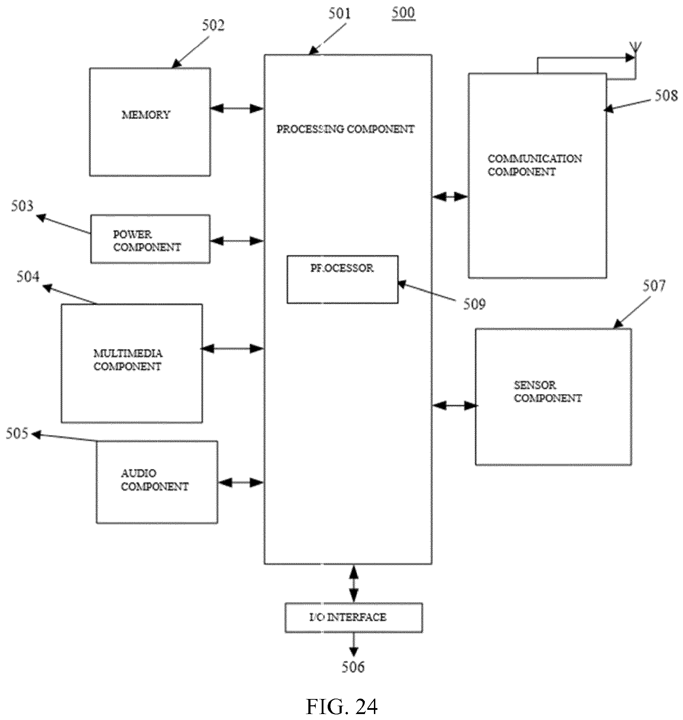

Corresponding to the aforementioned embodiment of the fingerprint recognition method, the present disclosure also provides an electronic device for fingerprint recognition equipment, which includes a processor, a memory for storing processor executable instructions and display screen. The fingerprint recognition area of the display screen is equipped with an under-screen fingerprint recognition module. Wherein the processor is configured to: perform the steps of the fingerprint recognition method according to the instruction, including:
When the display screen of a terminal device is in Always on Display mode or the Off-Screen mode, if a wake event is detected, the system of the terminal device is woken up, and enter into HBM mode.
Collect fingerprint information;
The fingerprint information is identified according to a pre-stored fingerprint database to obtain a result;
Wherein the processor is configured to:
   The steps of performing the fingerprint recognition method according to the instruction, include:
   The display screen is configured to:
   Control the display state according to the steps of the fingerprint identification method by the processor;
   Under-screen fingerprint recognition module is configured to:
      Perform fingerprint recognition. Referring to FIG. 24, the electronic device 500 can be a terminal equipment such as a computer, a mobile phone, a digital broadcast terminal, a messaging device, a game console, a tablet device, a medical device, a fitness device, a personal digital assistant, etc.

The electronic device 500 can comprise one or more of the following components: a processing component 501, a memory 502, a power component 503, a multimedia component 504, an audio component 505, an input/output (I/O) interface 506, a sensor component 507, and communication component 508.

Processing component 501 is typically used to control the overall operation of electronic device 500, such as operations associated with display, telephone calls, data communications, camera operations, and recording operations. Processing component 501 can include one or more processors 509 to execute instructions to perform all or part of the steps of the method described above. In addition, processing component 501 can include one or more modules to facilitate interaction between component 501 and other components. For example, processing component 501 can include a multimedia module to facilitate interaction between multimedia component 504 and processing component 501.

Memory 502 is configured to store various types of data to support operations on electronic device 500. Examples of such data include instructions for any application or method operating on electronic device 500, contact data, phone book data, messages, pictures, videos, etc. Memory 502 can be implemented by any type of volatile or non-volatile storage device, or a combination thereof, such as static random-access memory (SRAM), electrically erasable programmable read only memory (EEPROM), erasable programmable read only memory (EPROM), programmable read only memory (PROM), read only memory (ROM), magnetic memory, flash memory, disks or optical disks.

Power component 503 provides power to various components of electronic device 500. Power component 503 can include a power management system, one or more power sources, and other components associated with generating, managing, and distributing power for electronic device 500.

The multimedia component 504 includes a screen that provides an output interface between electronic device 500 and a user. The screen includes a touch panel (TP), which is implemented as a touch screen to receive input signals from the user. The touch panel includes one or more touch sensors to sense touches, swipes, and gestures on the touch panel. The touch sensor can not only sense the boundaries of the touch or swipe action, but can also detect the duration and pressure associated with the touch or slide operation. In some embodiments, the multimedia component 504 includes a front camera and/or a rear camera. When the electronic device 500 is in an operation mode, such as a shooting mode or a video mode, the front camera and/or the rear camera can receive external multimedia data. Each front and rear camera can be a fixed optical lens system or have focal length and optical zoom capabilities.

The audio component 505 is configured to output and/or input an audio signal. For example, the audio component 505 includes a microphone (MIC) that is configured to receive an external audio signal when the electronic device 500 is in an operational mode, such as a call mode, a recording mode, and a voice recognition mode. The received audio signal may be further stored in memory 502 or transmitted via communication component 508. In some embodiments, the audio component 505 also includes a speaker for outputting an audio signal.

The I/O interface 506 provides an interface between the processing component 501 and a peripheral interface module, which may be a keyboard, a click wheel, a button, etc. These buttons may include but not limited to, a home button, a volume button, a start button, and a lock button.

Sensor component 507 includes one or more sensors, which are designed to provide status assessment of all aspects to electronic device 500. For example, the sensor component 507 can detect On/Off state of the electronic device 500, a relative positioning of components in the electronic device 500, such as a display and a keypad of the electronic device 500, and the sensor component 507 can also detect the location changes of the electronic device 500 or a component in the electronic device 500, whether there is a contact between a user and the electronic device 500, the orientation or acceleration/deceleration of electronic device 500, or the temperature changes of electronic device 500. Sensor component 507 can include a proximity sensor, which is configured to detect the presence of nearby objects without any physical contact. Sensor component 507 may also include an optical sensor, such as a CMOS or CCD image sensor, to be used in imaging applications. In some embodiments, the sensor component 507 can also include an acceleration sensor, a gyro sensor, a magnetic sensor, a pressure sensor, a temperature sensor, a photoelectric sensor or a GPS sensor.

Communication component 508 is configured to facilitate wired or wireless communication between electronic device 500 and other devices. The electronic device 500 can access a wireless network based on a communication standard, such as Wi-Fi, 2G, 3G or 4G, or a combination thereof. In some embodiments, communication component 508 receives broadcast signals or broadcast associated information from an external broadcast management system via a broadcast channel. In an exemplary embodiment, the communication component 508 also includes a near field communication (NFC) module to facilitate short range communication. For example, the NFC module can be implemented based on radio frequency identification (RFID) technology, infrared data association (IrDA) technology, ultra-wideband (UWB) technology, Bluetooth (BT) technology, or other technologies.

In some embodiments, electronic device 500 may include one or more application specific integrated circuits (ASICs), digital signal processors (DSPs), digital signal processing devices (DSPDs), programmable logic devices (PLDs), field programmable A gate array (FPGA), controller, microcontroller, microprocessor, or other electronic component for performing the above methods.

The implementation process of the function and the role of each unit in the above device is specifically described in the implementation process of the corresponding steps in the aforementioned method, and details are not to be described herein again.

For the device embodiment, since it basically corresponds to the method embodiment, refer to the description in the method embodiment for anything related. The device embodiments described above are merely illustrative, wherein the units described as separate components may or may not be physically separated, and the components displayed as units may or may not be physical units, i.e. may located in the same place, or distributed to multiple network units. Some or all of the modules may be selected according to actual needs to achieve the objectives of the present disclosure. Ordinary technicians in the field can understand and implement without any creative effort.
Corresponding to the embodiment of the fingerprint recognition method mentioned above, the present disclosure further provides a computer readable storage medium, which stores thereon a computer program. When the program being implemented by the processor 509 of the electronic device, implements the fingerprint recognition method, including: when the display screen is in Always on Display mode or the Off-Screen mode, if a wake event is detected, the system of the electronic device is woken up, and the display screen will enter into High Brightness mode;
Collect fingerprint information;
The fingerprint information is identified according to a pre-stored fingerprint database to obtain a result.

The present disclosure may take the form of a computer program product embodied on one or more storage media (including but not limited to disk storage, CD-ROM, optical storage, etc.) in which program code is embodied. Computer available storage media includes both permanent and non-persistent, mobile and non-mobile media, and information storage can be implemented by any method or technology. The information can be computer readable instructions, data structures, modules of programs, or other data. Examples of computer storage media include, but are not limited to, phase change memory (PRAM), static random-access memory (SRAM), dynamic random-access memory (DRAM), other types of random-access memory (RAM), read only memory. (ROM), electrically erasable programmable read only memory (EEPROM), flash memory or other memory technology, compact disk read only memory (CD-ROM), digital versatile disk (DVD) or other optical storage, Magnetic tape cartridges, magnetic tape storage or other magnetic storage devices or any other non-transportable media, which can be used to store information that can be accessed by a computing device.

In another aspect, a mobile terminal is provided including the device described above, and further including a microphone and a speaker.

In some embodiments, the mobile terminal is a mobile phone.

In some embodiments, the processor is a general-purpose processor, such as central processing unit (CPU) of the mobile phone, which is configured to not only realize the methods described above but also run programs or applications (Apps) on the mobile phone, such as browsing, gaming, video/textual/voice communications, etc.

In some other embodiments, the processor is an ASIC described above.

In some embodiments, the electronic device is integrated with the mobile phone; in some other embodiments, the electronic device can be a plug-and-play device for the mobile phone, and can access and be controlled by the programs/apps/instructions stored on the phone. In some implementations, the electronic device can draw power from the phone. In some other implementations, the electronic device can have its own battery.

In some embodiments, the mobile phone further includes a micro-electro-mechanical systems (MEMS) motion sensor configured to sense a fingerprint recognition method.

At least some of the embodiments of the present disclosure can have one or more of the following advantages: the system can maintain High Brightness mode (HBM) and maintain the intensity of light during the fingerprint collection process by waking up the system, i.e., waking up Application Processor (AP) of the equipment, first and controlling the display screen to enter High Brightness mode before a fingerprint is collected, so that the fingerprint information can be collected with the advantage of high intensity light, which is beneficial to avoid the problem of blurry fingerprint image caused by lack of light intensity, the space between fingers and display screen, dry fingers and low-temperature fingers, to ensure the amount of fingerprint information collected, improve the clarity of the collected fingerprint image and the efficiency of fingerprint recognition.

It should be understood that, although the terms "first," "second," "third," etc. may be used in the present disclosure to describe specific information, such information should not be limited to these terms. These terms are only used to distinguish the same type of information from one another. For example, the first information may also be referred to as the second information without departing from the scope of the present disclosure. Similarly, the second information may also be referred to as the first information. Depending on the context, the word "if" as used herein may be interpreted as "in the case of," "when" or "in response to the specific situation of."

In the present disclosure, it is to be understood that the terms "lower," "upper," "center," "longitudinal," "transverse," "length," "width," "thickness," "upper," "lower," "front," "back," "left," "right," "vertical," "horizontal," "top," "bottom," "inside," "outside," "clockwise," "counterclockwise," "axial," "radial," "circumferential," "column," "row," and other orientation or positional relationships are based on example orientations illustrated in the drawings, and are merely for the convenience of the description of some embodiments, rather than indicating or implying the device or component being constructed and operated in a particular orientation.

In the present disclosure, the terms "installed," "connected," "coupled," "fixed" and the like shall be understood broadly, and may be either a fixed connection or a detachable connection, or integrated, unless otherwise explicitly defined. These terms can refer to mechanical or electrical connections, or both. Such connections can be direct connections or indirect connections through an intermediate medium. These terms can also refer to the internal connections or the interactions between elements. The specific meanings of the above terms in the present disclosure can be understood by those of ordinary skill in the art on a case-by-case basis.

In the present disclosure, a first element being "on," "over," or "below" a second element may indicate direct contact between the first and second elements, without contact, or indirect through an intermediate medium, unless otherwise explicitly stated and defined.

Moreover, a first element being "above," "over," or "at an upper surface of" a second element may indicate that the first element is directly above the second element, or merely that the first element is at a level higher than the second element. The first element "below," "underneath," or "at a lower surface of" the second element may indicate that the first element is directly below the second element, or merely that the first element is at a level lower than the second feature. The first and second elements may or may not be in contact with each other.

In the description of the present disclosure, the terms "one embodiment," "some embodiments," "example," "specific example," or "some examples," and the like may indicate a specific feature described in connection with the embodiment or example, a structure, a material or feature included in at least one embodiment or example. In the present disclosure, the schematic representation of the above terms is not necessarily directed to the same embodiment or example.

In some embodiments, the control and/or interface software or app can be provided in a form of a non-transitory computer-readable storage medium having instructions stored thereon is further provided. For example, the non-transitory computer-readable storage medium may be a Read-Only Memory (ROM), a Random-Access Memory (RAM), a Compact Disc Read-Only Memory (CD-ROM), a magnetic tape, a floppy disk, optical data storage equipment, a flash drive such as a USB drive or an SD card, and the like.

Implementation of the subject matter and the operations described in this disclosure can be implemented in digital electronic circuitry, or in computer software, firmware, or hardware, including the structures disclosed herein and their structural equivalents, or in combinations of one or more of them. Implementations of the subject matter described in this disclosure can be implemented as one or more computer programs, i.e., one or more modules of computer program instructions, encoded on one or more computer storage medium for execution by, or to control the operation of, data processing apparatus.

Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them.

Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, drives, or other storage devices). Accordingly, the computer storage medium may be tangible.

The operations described in this disclosure can be implemented as operations performed by a data processing apparatus on data stored on one or more computer-readable storage devices or received from other sources.

The devices in this disclosure can include special purpose logic circuitry, e.g., an FPGA (field-programmable gate array), or an ASIC (application-specific integrated circuit). The device can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The devices and execution environment can realize various different computing model infrastructures, such as web services, distributed computing, and grid computing infrastructures. For example, the devices can be controlled remotely through the Internet, on a smart phone, a tablet computer or other types of computers, with a web-based graphic user interface (GUI).

A computer program (also known as a program, software, software application, app, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this disclosure can be performed by one or more programmable processors executing one or more computer programs to perform actions by operating on input data and generating output. The processes and logic flows can also be performed by, and apparatus can also be implemented as, special purpose logic circuitry, e.g., an FPGA, or an ASIC.

Processors suitable for the execution of a computer program include, by way of example, both general and special purpose microprocessors, and any one or more processors of any kind of digital computer. Generally, a processor will receive instructions and data from a read-only memory, or a random-access memory, or both. Elements of a computer can include a processor configured to perform actions in accordance with instructions and one or more memory devices for storing instructions and data.

Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few.

Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, implementations of the subject matter described in this specification can be implemented with a computer and/or a display device, e.g., a VR/AR device, a head-mount display (HMD) device, a head-up display (HUD) device, smart eyewear (e.g., glasses), a CRT (cathode-ray tube), LCD (liquid-crystal display), OLED (organic light emitting diode), TFT (thin-film transistor), plasma, other flexible configuration, or any other monitor for displaying information to the user and a keyboard, a pointing device, e.g., a mouse, trackball, etc., or a touch screen, touch pad, etc., by which the user can provide input to the computer.

Other types of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In an example, a user can speak commands to the focusing device, to perform a jittering compensation or other desired operations.

Implementations of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

While this specification contains many specific implementation details, these should not be construed as limitations on the scope of any claims, but rather as descriptions of features specific to particular implementations. Certain features that are described in this specification in the context of separate implementations can also be implemented in combination in a single implementation. Conversely, various features that are described in the context of a single implementation can also be implemented in multiple implementations separately or in any suitable subcombination.

In certain circumstances, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

Thus, particular implementations of the subject matter have been described.

## Claims

1. A fingerprint identification method, which is applied to a terminal device, comprising:
(101) in response to detecting that a current location of the terminal device is in a location range corresponding to a preset location when a display screen of the terminal device is in an Always on Display mode or in a Screen-Off mode, waking up a system of the terminal device and making a display screen of the terminal device enter into High Brightness mode, wherein entering into High Brightness mode comprises displaying white light or cyan light in the display screen;
displaying a fingerprint recognition area and an application display area in the display screen;
(102) collecting fingerprint information for the user by an under-screen fingerprint identification module in a terminal device by using rays emitted by the white light or the cyan light;
(103) identifying the fingerprint information to obtain a recognition result according to a fingerprint database pre-stored for the terminal device, wherein the fingerprint database is obtained by the user entering to-be-pre-stored fingerprint information with the fingerprint identification module of the terminal device; and
in response to determining that an application icon in the display screen is selected, and the fingerprint is successfully recognized, unlocking the display screen, and entering the application interface corresponding to the selected application icon.

2. The method of claim 1, further comprising:
(104) unlocking the display screen and turning off the High Brightness mode when the fingerprint information is successfully recognized.

3. The method of claim 1, wherein the entering into the High Brightness mode includes:
entering into the High Brightness mode after screen spots are turned on.

4. The method of claim 3, wherein the entering into the High Brightness mode after the screen spots are turned on includes:
entering the High Brightness mode with the fingerprint recognition area displayed;
turning on the screen spots at said fingerprint recognition area.

5. The method of claim 4, wherein the collecting fingerprint information includes:
comparing a pressure value of a touch operation with a preset standard pressure value when there is the touch operation at the fingerprint recognition area; and
collecting the fingerprint information at a fingerprint identification area when a current pressure value is greater than or equal to the preset standard pressure value.

6. The method of claim 5, further comprising: (105) outputting pressure prompt information when the current pressure value is less than the preset standard pressure value.

7. The method of claim 5, wherein when there is the touch operation at the fingerprint recognition area, the comparing the pressure value of the touch operation with the preset standard pressure value includes:
comparing a duration of the touch operation with a preset standard pressure duration when there is the touch operation at the fingerprint recognition area; and
comparing the pressure value of said touch operation with said preset standard pressure value when the duration detected is up to the preset standard pressure duration.

8. The method of claim 5, wherein when there is the touch operation at the fingerprint recognition area, the comparing the pressure value of the touch operation with the preset standard pressure value includes:
comparing an area of the touch operation with a preset standard pressure area when there is the touch operation at the fingerprint recognition area; and
comparing the pressure value of said touch operation with said preset standard pressure value when the detected touch area is greater than or equal to said preset standard pressure area.

9. The method of claim 6, wherein, in the outputting pressure prompt information, the pressure prompt information output corresponds to the current pressure value when the current pressure value is less than the preset standard pressure value, wherein different pressure values correspond to different pressure prompt information.

10. The method of claim 6 or 9, wherein the outputting pressure prompt information includes:
playing prompt animation; and/or,
displaying text prompt message; and/or,
displaying current pressure value; and/or,
playing voice prompt message; and/or,
outputting vibration prompt.

11. The method of claim 10, wherein the playing prompt animation includes:
(1051) displaying a pressure display area corresponding to the current pressure value; and
(1052) zooming a display range of said pressure display area, and/or, change a color of said pressure display area, according to changes of the current pressure value.

12. The method of claim 11, wherein the outputting pressure prompt information further comprises: prompting the preset standard pressure value.

13. The method of claim 12, wherein the playing prompt animation further comprises: (1051') displaying a preset standard pressure area corresponding to the preset standard pressure value.

14. The method of claim 1, further comprising an operation of paying in accordance with the recognition result.

15. An electronic device, comprising:
a processor;
a storage which is designed to store executable instructions for the processor;
a display screen, wherein a fingerprint recognition area of the display screen is equipped with an under-screen fingerprint recognition module;
wherein the processor is configured to: according to the executable instruction to execute the method as claimed in any of claims 1 to 14;
wherein the display screen is configured to: the processor control the display mode of the display screen according to said method as claimed in any of claims 1 to 14;
wherein the under-screen fingerprint recognition module is configured to:
perform fingerprint recognition in said High Brightness mode.

## Patentansprüche

1. Fingerabdruckerkennungsverfahren, das auf ein Endgerät angewendet wird, umfassend:
(101) als Reaktion auf das Erfassen, dass ein aktueller Standort des Endgeräts in einem Standortbereich liegt, der einem voreingestellten Standort entspricht, wenn sich ein Anzeigebildschirm des Endgeräts in einem Always-On-Display-Modus oder in einem Screen-Off-Modus befindet, Aufwecken eines Systems des Endgeräts und Veranlassen, dass ein Anzeigebildschirm des Endgeräts in den Modus High-Brightness-Modus eintritt, wobei der Eintritt in den High-Brightness-Modus das Anzeigen von weißem Licht oder cyanfarbenem Licht auf dem Anzeigebildschirm umfasst; Anzeigen eines Fingerabdruckerkennungsbereichs und eines Anwendungsanzeigebereichs auf dem Anzeigebildschirm;
(102) Sammeln von Fingerabdruckinformationen für den Benutzer durch ein unter dem Bildschirm befindliches Fingerabdruckerkennungsmodul in einem Endgerät unter Verwendung von Strahlen, die von dem weißen Licht oder dem cyanfarbenen Licht emittiert werden;
(103) Identifizieren der Fingerabdruckinformation, um ein Erkennungsergebnis gemäß einer für das Endgerät vorgespeicherten Fingerabdruckdatenbank zu erhalten, wobei die Fingerabdruckdatenbank durch den Benutzer erhalten wird, der die vorzuspeichernde Fingerabdruckinformation mit dem Fingerabdruckerkennungsmodul des Endgeräts eingibt; und
als Reaktion auf das Feststellen, dass ein Anwendungssymbol auf dem Anzeigebildschirm ausgewählt ist und der Fingerabdruck erfolgreich erkannt wurde, Entsperren des Anzeigebildschirms und Aufrufen der Anwendungsschnittstelle, die dem ausgewählten Anwendungssymbol entspricht.

2. Verfahren nach Anspruch 1, das ferner umfasst:
(104) Entsperren des Anzeigebildschirms und Ausschalten des High-Brightness-Modus, wenn die Fingerabdruckinformation erfolgreich erkannt wurde.

3. Verfahren nach Anspruch 1, wobei das Eintreten in den High-Brightness-Modus umfasst:
Eintreten in den High-Brightness-Modus, nachdem die Bildschirmspots eingeschaltet wurden.

4. Verfahren nach Anspruch 3, wobei das Eintreten in den High-Brightness-Modus nach dem Einschalten der Bildschirmspots umfasst:
Eintreten in den High-Brightness-Modus, wobei der Fingerabdruckerkennungsbereich angezeigt wird;
Einschalten der Bildschirmspots in Fingerabdruckerkennungsbereich.

5. Verfahren nach Anspruch 4, wobei das Erfassen der Fingerabdruckinformation umfasst:
Vergleichen eines Druckwertes einer Touch-Betätigung mit einem voreingestellten Standarddruckwert, wenn eine Touch-Betätigung im Fingerabdruckerkennungsbereich stattfindet; und
Erfassen der Fingerabdruckinformation in einem Fingerabdruckerkennungsbereich, wenn ein aktueller Druckwert größer oder gleich dem voreingestellten Standarddruckwert ist.

6. Verfahren nach Anspruch 5, das ferner umfasst: (105) Ausgeben von Druck-Prompt-Informationen, wenn der aktuelle Druckwert geringer ist als der voreingestellte Standarddruckwert.

7. Verfahren nach Anspruch 5, wobei bei einer Touch-Betätigung im Fingerabdruckerkennungsbereich das Vergleichen des Druckwertes der Touch-Betätigung mit dem voreingestellten Standarddruckwert umfasst:
Vergleichen einer Dauer der Touch-Betätigung mit einer voreingestellten Standarddruckdauer, wenn eine Touch-Betätigung im Fingerabdruckerkennungsbereich stattfindet; und
Vergleichen des Druckwertes der Touch-Betätigung mit dem voreingestellten Standarddruckwert, wenn die erfasste Dauer bis zur voreingestellten Standarddruckdauer beträgt.

8. Verfahren nach Anspruch 5, wobei bei einer Touch-Betätigung im Fingerabdruckerkennungsbereich das Vergleichen des Druckwertes der Touch-Betätigung mit dem voreingestellten Standarddruckwert umfasst:
Vergleichen eines Bereichs der Touch-Betätigung mit einer voreingestellten Standarddruckbereich, wenn eine Touch-Betätigung im Fingerabdruckerkennungsbereich stattfindet; und
Vergleichen des Druckwertes der Touch-Betätigung mit dem voreingestellten Standarddruckwert, wenn der erfasste Touch-Bereich größer oder gleich dem voreingestellten Standarddruckbereich ist.

9. Verfahren nach Anspruch 6, wobei bei der Ausgabe von Druck-Prompt-Informationen die ausgegebenen Druck-Prompt-Informationen dem aktuellen Druckwert entsprechen, wenn der aktuelle Druckwert kleiner als der voreingestellte Standarddruckwert ist, wobei unterschiedliche Druckwerte unterschiedlichen Druck-Prompt-Informationen entsprechen.

10. Verfahren nach Anspruch 6 oder 9, wobei das Ausgeben von Druck-Prompt-Informationen umfasst:
Abspielen von Prompt-Animationen; und/oder,
Anzeigen einer Text-Prompt-Nachricht; und/oder,
Anzeigen des aktuellen Druckwertes; und/oder,
Abspielen einer Sprach-Prompt-Nachricht; und/oder,
Ausgeben eines Vibration-Prompts.

11. Verfahren nach Anspruch 10, wobei das Abspielen der Prompt-Animation umfasst:
(1051) Anzeigen eines Druckanzeigebereichs, der dem aktuellen Druckwert entspricht; und
(1052) Zoomen eines Anzeigebereichs des Druckanzeigebereichs und/oder Ändern einer Farbe des Druckanzeigebereichs in Abhängigkeit von Änderungen des aktuellen Druckwertes.

12. Verfahren nach Anspruch 11, wobei das Ausgeben von Druck-Prompt-Informationen ferner umfasst: Prompten des voreingestellten Standarddruckwertes.

13. Verfahren nach Anspruch 12, wobei das Abspielen der Prompt-Animation ferner umfasst: (1051') Anzeigen eines voreingestellten Standarddruckbereichs, der dem voreingestellten Standarddruckwert entspricht.

14. Verfahren nach Anspruch 1, das ferner einen Zahlungsvorgang in Abhängigkeit vom Erkennungsergebnis umfasst.

15. Elektronische Vorrichtung, die aufweist:
einen Prozessor;
einen Speicher, der dazu dient, ausführbare Anweisungen für den Prozessor zu speichern;
einen Anzeigebildschirm, wobei ein Fingerabdruckerkennungsbereich des Anzeigebildschirms mit einem unter dem Bildschirm befindlichen Fingerabdruckerkennungsmodul ausgestattet ist;
wobei der Prozessor für Folgendes ausgebildet ist: Ausführen, gemäß der ausführbaren Anweisung, des Verfahrens nach einem der Ansprüche 1 bis 14;
wobei der Anzeigeschirm für Folgendes ausgebildet ist: der Prozessor steuert den Anzeigemodus des Anzeigeschirms gemäß dem Verfahren nach einem der Ansprüche 1 bis 14;
wobei das unter dem Bildschirm befindliche Fingerabdruckerkennungsmodul für Folgendes ausgebildet ist:
Durchführen der Fingerabdruckerkennung im High-Brightness-Modus.

## Revendications

1. Procédé d'identification d'empreintes digitales, qui est appliqué à un dispositif terminal, comprenant les étapes consistant à :
(101) en réponse à la détection du fait qu'une position courante du dispositif terminal est située dans une plage de position correspondant à une position prédéfinie lorsqu'un écran d'affichage du dispositif terminal est dans un mode « Affichage permanent » ou dans un mode « Écran éteint », réveiller un système du dispositif terminal et amener un écran d'affichage du dispositif terminal à entrer dans un mode « Haute luminosité », dans lequel l'entrée dans le mode « Haute luminosité » consiste à afficher une lumière blanche ou une lumière cyan dans l'écran d'affichage ;
afficher une zone de reconnaissance d'empreintes digitales et une zone d'affichage d'application dans l'écran d'affichage ;
(102) collecter des informations d'empreintes digitales de l'utilisateur par un module d'identification d'empreintes digitales sous-écran dans un dispositif terminal en utilisant des rayons émis par la lumière blanche ou par la lumière cyan ;
(103) identifier les informations d'empreintes digitales pour obtenir un résultat de reconnaissance conformément à une base de données d'empreintes digitales prémémorisée du dispositif terminal, dans lequel la base de données d'empreintes digitales est obtenue par l'utilisateur qui entre des informations d'empreintes digitales à prémémoriser au moyen du module d'identification d'empreintes digitales du dispositif terminal ; et
en réponse à la détermination du fait qu'une icône d'application dans l'écran d'affichage est sélectionnée, et que les empreintes digitales sont reconnues avec succès, déverrouiller l'écran d'affichage, et entrer dans l'interface d'application correspondant à l'icône d'application sélectionnée.

2. Procédé selon la revendication 1, comprenant en outre l'étape consistant à :
(104) déverrouiller l'écran d'affichage et désactiver le mode « Haute luminosité » lorsque les informations d'empreintes digitales sont reconnues avec succès.

3. Procédé selon la revendication 1, dans lequel l'étape d'entrée dans le mode « Haute luminosité » consiste à :
entrer dans le mode « Haute luminosité » après l'activation de points lumineux d'écran.

4. Procédé selon la revendication 3, dans lequel l'étape d'entrée dans le mode « Haute luminosité » après l'activation des points lumineux d'écran consiste à :
entrer dans le mode « Haute luminosité » avec la zone de reconnaissance d'empreintes digitales affichée ;
activer les points lumineux au niveau de ladite zone de reconnaissance d'empreintes digitales.

5. Procédé selon la revendication 4, dans lequel l'étape de collecte d'informations d'empreintes digitales consiste à :
comparer une valeur de pression d'une opération de toucher à une valeur de pression standard prédéfinie lors de l'occurrence de l'opération de toucher au niveau de la zone de reconnaissance d'empreintes digitales ; et
collecter les informations d'empreintes digitales au niveau d'une zone d'identification d'empreintes digitales lorsqu'une valeur de pression courante est supérieure ou égale à la valeur de pression standard prédéfinie.

6. Procédé selon la revendication 5, comprenant en outre l'étape consistant à : (105) délivrer des informations d'invite de pression lorsque la valeur de pression courante est inférieure à la valeur de pression standard prédéfinie.

7. Procédé selon la revendication 5, dans lequel, lors de l'occurrence de l'opération de toucher au niveau de la zone de reconnaissance d'empreintes digitales, l'étape de comparaison de la valeur de pression de l'opération de toucher à la valeur de pression standard prédéfinie consiste à :
comparer une durée de l'opération de toucher à une durée de pression standard prédéfinie lors de l'occurrence de l'opération de toucher au niveau de la zone de reconnaissance d'empreintes digitales ; et
comparer la valeur de pression de ladite opération de toucher à ladite valeur de pression standard prédéfinie lorsque la durée détectée est égale à la durée de pression standard prédéfinie.

8. Procédé selon la revendication 5, dans lequel, lors de l'occurrence de l'opération de toucher au niveau de la zone de reconnaissance d'empreintes digitales, l'étape de comparaison de la valeur de pression de l'opération de toucher à la valeur de pression standard prédéfinie consiste à :
comparer une zone de l'opération de toucher à une zone de pression standard prédéfinie lors de l'occurrence de l'opération de toucher au niveau de la zone de reconnaissance d'empreintes digitales ; et
comparer la valeur de pression de ladite opération de toucher à ladite valeur de pression standard prédéfinie lorsque la zone de toucher détectée est supérieure ou égale à ladite zone de pression standard prédéfinie.

9. Procédé selon la revendication 6, dans lequel, à l'étape de délivrance d'informations d'invite de pression, la sortie d'informations d'invite de pression correspond à la valeur de pression courante lorsque la valeur de pression courante est inférieure à la valeur de pression standard prédéfinie, dans lequel des valeurs de pression différentes correspondent à des informations d'invite de pression différentes.

10. Procédé selon la revendication 6 ou la revendication 9, dans lequel l'étape de délivrance d'informations d'invite de pression consiste à :
lire une animation d'invite ; et/ou,
afficher un message d'invite textuel ; et/ou,
afficher une valeur de pression courante ; et/ou,
lire un message d'invite vocal ; et/ou,
délivrer une invite de vibration.

11. Procédé selon la revendication 10, dans lequel la lecture d'animation d'invite comprend les étapes consistant à :
(1051) afficher une zone d'affichage de pression correspondant à la valeur de pression courante ; et
(1052) zoomer une plage d'affichage de ladite zone d'affichage de pression, et/ou modifier une couleur de ladite zone d'affichage de pression, conformément à des variations de la valeur de pression courante.

12. Procédé selon la revendication 11, dans lequel la délivrance d'informations d'invite de pression comprend en outre l'étape consistant à : inviter à la valeur de pression standard prédéfinie.

13. Procédé selon la revendication 12, dans lequel la lecture d'une animation d'invite comprend en outre l'étape consistant à : (1051') afficher une zone de pression standard prédéfinie correspondant à la valeur de pression standard prédéfinie.

14. Procédé selon la revendication 1, comprenant en outre une opération de paiement conformément au résultat de reconnaissance.

15. Dispositif électronique, comprenant :
un processeur ;
une mémoire qui est conçue pour maintenir des instructions exécutables par le processeur ;
un écran d'affichage, dans lequel une zone de reconnaissance d'empreintes digitales de l'écran d'affichage est équipée d'un module de reconnaissance d'empreintes digitales sous-écran ;
dans lequel le processeur est configuré : conformément à l'instruction exécutable, pour exécuter le procédé selon l'une quelconque des revendications 1 à 14 ;
dans lequel l'écran d'affichage est configuré pour : commander, par le processeur, le mode d'affichage de l'écran d'affichage conformément audit procédé selon l'une quelconque des revendications 1 à 14 ;
dans lequel le module de reconnaissance d'empreintes digitales sous-écran est configuré pour :
mettre en œuvre une reconnaissance d'empreintes digitales dans ledit mode « Haute luminosité ».
